Europäisches Patentamt

European Patent Office

Office européen des brevets

(11) Publication number: 0 350 519
A1

# EUROPEAN PATENT APPLICATION

(21) Application number: 88111143.9

(22) Date of filing: 12.07.88

(51) Int. Cl.4: C08J 3/02 , C08J 3/26 , C08J 3/16 , //C08L83:04

(43) Date of publication of application:
17.01.90 Bulletin 90/03

(84) Designated Contracting States:
DE FR GB

(71) Applicant: TORAY SILICONE COMPANY, LIMITED
2-3-16, Muro-machi Nihonbashi
Chuo-ku Tokyo 103(JP)

(72) Inventor: Shimizu, Koji
4-25-14 Aobadai
Ichihara-shi Chiba Prefecture(JP)
Inventor: Yoshida, Keiji
1-6, 1-chome Yushudai Nishi
Ichihara-shi Chiba Prefecture(JP)
Inventor: Saito, Masayuki
1-6 Yushudai Nishi
Ichihara-shi Chiba Prefecture(JP)
Inventor: Hamada, Mitsuo
3-5-17 Okubo
Ichihara-shi Chiba Prefecture(JP)

(74) Representative: Spott, Gottfried, Dr. et al
Patentanwälte Spott und Puschmann
Sendlinger-Tor-Platz 11
D-8000 München 2(DE)

(54) A method for producing cured silicone rubber powder.

(57) The present invention provides an improved method for preparing a finely divided, cured silicone rubber powder having a uniform particle size at a high production rate by combining known production methods with a heat curable liquid silicone rubber composition that has not heretofore been disclosed as being unique for use with these methods. The curable composition comprises a hydroxyl-containing diorganopolysiloxane, an organohydrogensiloxane and a suitable curing catalyst.

# A METHOD FOR PRODUCING CURED SILICONE RUBBER POWDER

This application is a continuation-in-part of copending application serial no. 155,346, filed on February 12, 1988.

The present invention relates to a method for producing cured silicone rubber powder. More particularly, this invention relates to a method for producing silicone rubber in the form of a uniform, finely divided powder from a specified class of heat-curable liquid organosiloxane compositions.

Methods known in the art for producing silicone rubber powder include pulverizing cured silicone rubber into a powder after it has been frozen with dry ice, and pulverizing cured silicone rubber into a powder using a grinder at ambient temperature. The primary disadvantage of these methods is the difficulty of obtaining microfine particles of uniform shape at a high production rate.

The following three copending United States patent applications filed in the names of two or three of the present four inventors disclose various methods for preparing powdered forms of cured silicone rubber.

In accordance with the method disclosed in copending application serial No. 34,368, filed on April 6, 1987, a liquid, heat curable silicone rubber composition is emulsified in water in the presence of a surfactant at a temperature of from 0 to 25° C. The emulsion is then sprayed into a water bath maintained at a temperature of at least 25° C. The temperature is sufficiently high to cure the ingredients of the silicone rubber composition. The disadvantage of this method is that the specific resistivity of the resultant particles is in the order of from $10^{-12}$ to $10^{-13}$ ohm-centimeter, which is typically too low for an electrical insulating material.

Copending U.S. Pat. Application Serial No. 84,068, filed on August 11, 1987 teaches blending the ingredients of a curable liquid silicone rubber composition at a temperature of from -60 to +5° C and curing the resultant composition by spraying it into air heated to a temperature of from 80 to 200° C to form a powder. While the production rate of this method is very high and the shape of the particles approaches that of a true sphere, it is nevertheless difficult to prepare a fine powder with a uniform particle size.

Finally, copending U.S. Pat. Application Serial No. 95,794, filed on September 14, 1987 teaches dispersing a curable liquid silicone rubber composition into water maintained at a temperature of less than 25° C and in turn dispersing the resultant dispersion into water maintained at a temperature of at least 50° C.

Although the cured powders produced using the liquid silicone rubber compositions disclosed as preferred embodiments, which are the only ones exemplified in the aforementioned pending applications, represent a substantial improvement over prior art materials, these cured powders do not satisfy the two major requirements for a commercially useful product, namely the ability to be produced with a uniformly small particle size at a high production rate. The exemplified liquid silicone rubber compositions comprise a vinyl-substituted deorganopolysiloxane and an organohydrogensiloxane containing at least two silicon-bonded hydrogen atoms per molecule. The compositions cure by a platinum-catalyzed hydrosilation reaction.

The object of the present invention is to provide an improved method for preparing a finely divided, cured silicone rubber powder having a uniform particle size at a high production rate by combining known production methods with a heat curable liquid silicone rubber composition that has not heretofore been disclosed as being unique for use with these methods. The curable composition comprises a hydroxyl-containing diorganopolysiloxane, an organohydrogensiloxane and a suitable condensation catalyst.

The present invention provides an improved method for the production of a cured silicone rubber powder, said method comprising the steps of

I) dispersing the ingredients of a heat curable liquid silicone rubber composition in water to form a dispersion or emulsion containing said ingredients as the discontinuous phase, and then

II) curing said composition by bringing said dispersion or emulsion into contact with a heated liquid or a heated gas, where said liquid and gas are maintained at a temperature higher than that of said dispersion or said emulsion,

the improvement comprising selecting said heat curable liquid silicone rubber composition from compositions comprising (A) a diorganopolysiloxane having at least two silicon-bonded hydroxyl groups in each molecule, (B) an organohydrogenpolysiloxane having at least two silicon bonded hydrogen atoms in each molecule, and (C) an amount of condensation catalyst sufficient to promote the reaction of (A) and (B).

The characterizing feature of the present method that distinguishes it over the generic methods of the prior art discussed hereinabove is the ingredients of the heat curable liquid silicone rubber composition. These ingredients will now be discussed in detail.

One of these ingredients, referred to hereinafter as ingredient A, is a diorganopolysiloxane having at least two silicon-bonded hydroxyl groups in each molecule. The location of these hydroxyl groups within the molecule of ingredient A is not critical, however they are preferably present at both molecular terminals. The silicon-bonded organic groups are unsubstituted or substituted monovalent hydrocarbon radicals. Typical examples
of these radicals are alkyl radicals such as methyl, ethyl, propyl, and butyl; alkenyl radicals such as vinyl and allyl; aryl radicals such as phenyl; aralkyl radicals such as benzyl; cycloalkyl radicals such as cyclohexyl and cyclopentyl; and halogenated hydrocarbon radicals prepared by the partial or complete replacement of the hydrogen atoms in the preceding hydrocarbon radicals with halogen atoms such as fluorine, chlorine or bromine, i.e., 3-chloropropyl and 3,3,3-trifluoropropyl. The hydrocarbon radicals present in ingredient A are generally methyl, vinyl, and phenyl. It is not required that all of the hydrocarbon radicals be identical, and combinations of different hydrocarbon radicals are also permissible.

With respect to the molecular structure of ingredient A, a linear structure or a slightly branched linear structure is highly preferred. While the molecular weight of ingredient A is not specifically restricted, molecular weights of 3,000 or greater yield cured silicone rubber powders with superior physical characteristics and are therefore preferred.

Specific non-limiting examples of these organopolysiloxanes include hydroxyl-terminated dimethylpolysiloxanes, hydroxyl-terminated dimethylsiloxane-methylphenylsiloxane copolymers, hydroxyl-terminated methylvinylpolysiloxanes, and hydroxyl-terminated dimethylsiloxane-methylvinylsiloxane copolymers. These organopolysiloxanes can be synthesized by methods which are themselves known, for example, the ring-opening polymerization of cyclic organopolysiloxanes; the hydrolysis of straight-chain or branched-chain organopolysiloxane having hydrolyzable groups such as alkoxy or acyloxy; and the hydrolysis of one or two or more types of diorganopolysiloxanes.

Ingredient B functions as a crosslinker for ingredient A. Ingredient B is an organohydrogenpolysiloxane having at least two silicon-bonded hydrogen atoms in each molecule. These hydrogen atoms can be located at the molecular terminals or as pendant groups, or can be present at both locations. The silicon-bonded organic groups include the same types of hydrocarbon radicals discussed in connection with ingredient A, with the exception that aliphatically unsaturated hydrocarbon radicals such as vinyl are excluded because these can react with the silicon-bonded hydrogen atoms of ingredient B. The molecular configuration of ingredient B is not specifically restricted. Linear, cyclic and branched molecules in addition to network structures can be present individually or as mixtures of two or more species.

The viscosity of ingredient B can range from 1 to 1,000,000 centipoise (0.001 to 100 Pa.s) at 25°C. When the viscosity is less than 1 centipoise, the volatility is too high, and the concentration of ingredient B in the curable silicone rubber composition will be difficult to control. The industrial production rate for the present method undergoes a substantial reduction when the viscosity of ingredient B exceeds 1,000,000 centipoise (1000 Pa.s).

The concentration of silicon-bonded hydrogen atoms in ingredient B preferably does not exceed 1 wt%.

Ingredient C is a catalyst that promotes curing of the composition by means of a condensation reaction between ingredients A and B. Non-limiting examples of ingredient C include organic acid metal salts such as dibutyltin dilaurate, dibutyltin diacetate, tin octanoate, dibutyltin dioctate, tin laurate, ferric stannooctanoate, lead octanoate, lead laurate, and zinc octanoate; titanic acid esters such as tetrabutyl titanate, tetrapropyl titanate, and dibutoxytitanium bis(ethyl acetoacetate); amine compounds such as n-hexylamine and guanidine and their hydrochlorides; and platinum compounds such as chloroplatinic acid, alcohol or ketone solutions containing chloroplatinic acid, diketone-chloroplatinic acid complexes, platinum black, and supported platinum.

The concentration of ingredient C required to promote the condensation reaction will depend upon its chemical composition. When ingredient C is an organic acid metal salt, a titanic acid ester, an amine compound or amine hydrochloride, it is typically present at a concentration of from 0.01 to 5 weight parts, preferably from 0.05 to 2 weight parts per 100 weight parts of ingredient A. When ingredient C is a platinum compound, it is typically present at a concentration equivalent to from 0.1 to 1000 weight parts and preferably from 1 to 100 weight parts of platinum metal for each 1,000,000 weight parts of the total amount of ingredients A and B.

In accordance with the present method, the ingredients of a heat curable liquid silicone rubber composition of this invention are dispersed in water using one of the following methods: (1) ingredients A, B, and C are dispersed separately in the water; (2) a mixture of ingredients A and B is prepared in advance and is dispersed in the water, at which time ingredient C is added; or 3) ingredients A, B, and C are mixed in advance and then dispersed in the water. All three of these methods are suitable, however methods 2 and 3 are generally preferred.

When ingredients A, B, and C are mixed beforehand and this mixture is then dispersed in water, it is preferred that the liquid silicone rubber composition be prepared by mixing the ingredients of the composition at low temperatures. Said mixing temperature will range from -60 to +5°C., and preferably from -30 to 0°C. The organopolysiloxane used in the present invention gels when this temperature falls below -60°C. On the other hand, when this temperature exceeds +5°C, the curing reaction tends to proceed during mixing of the components. It is difficult to form a uniform dispersion in either case.

The aqueous dispersion or emulsion of the present heat curable liquid silicone rubber composition can be prepared by various methods. In accordance with one of these methods, water is added to the liquid silicone rubber composition, and this mixture is then passed through a commercial colloid mill to prepare the dispersion. Alternatively, the constituent components of the liquid silicone rubber composition are placed in a homogenizer water is added, and the composition is blended to homogeniety.

The water in which the curable liquid silicone rubber is dispersed can include a surfactant to improve the dispersibility of the aforementioned silicone rubber composition. In this case, the silicone rubber composition is combined with the surfactant-containing water at a temperature from 0 to 25°C. and an emulsion of the silicone rubber composition is formed.

The emulsions can be prepared by various methods. In one such method, surfactant and water are added to the silicone rubber composition and this mixture is passed through a commercial emulsifier such as a homogenizer or colloid mill. Alternatively, the constituent components of the silicone rubber composition are placed in a homogenizer, surfactant is added with mixing, water is then added, and the mixture is blended with stirring.

If a surfactant is used, it can be any of the nonionic and ionic surfactants and emulsifying agents known in the art to be useful for the preparation of silicone water-based emulsions, and no specific restrictions applies. It is advisable, however, to avoid the use of compounds having atoms or functional groups which can react with the silicon-bonded hydrogen atoms of ingredient B or which may inactivate these hydrogen atoms. The concentration of surfactant is typically from about 2 to about 30 weight parts per 100 weight parts of ingredient A.

The temperature range within which aqueous emulsions and dispersions of the present curable compositions are prepared is preferably from 0 to 25°C. When the temperature falls below 0°C the water freezes and the emulsion or dispersion may not form. When the temperature exceeds 25°C. curing of the silicone rubber composition occurs and emulsion of dispersion will become unstable.

As a result, the shape of the final cured silicone rubber particles will tend to be irregular.

The aqueous dispersion or emulsion containing the heat curable liquid silicone rubber composition of this invention is then contacted with a liquid or gas maintained at a temperature higher than that of the dispersion or emulsion in order to cure the silicone rubber composition. When the temperature of the curing medium is lower than the temperature of the dispersed or emulsified liquid silicone rubber composition the curing rate of the silicone rubber composition is reduced, and one of the objectives of the present method cannot be achieved. The temperature of the curing medium is preferably at least 50°C.

The only restriction applicable to the curing medium is that it must be one in which the dispersed or emulsified silicone rubber composition can be thermally cured. It will be understood that liquids which interfere with curing of the silicone rubber composition or which are good solvents for this composition should be avoided.

Specific, non-limiting examples of suitable liquid curing media include water, liquid paraffins, liquid waxes, and the liquid compounds used as heat transfer media, for example, dimethylpolysiloxane oils and phthalic acid esters. Among these liquids, water is the most preferred, based on its high heat capacity and ease of handling.

. Various methods can may be used to achieve contact between the dispersed or emulsified curable liquid silicone rubber composition and heated liquid or gaseous curing medium. In one such method, the dispersion is continually supplied in small portions to a stirrer-equipped mixer filled with hot water maintained at a specified temperature. Contact between the curing medium and the curable composition is maintained by stirring.

Alternatively, a hot liquid curing medium is added to the dispersed or emulsified curable composition and the resultant mixture is stirred. The volume of curing medium in such cases is at least twice that of the aqueous dispersion or emulsion.

If a gaseous curing medium is used, it should not be combustible. Specific, non-limiting examples of suitable gases include air and nitrogen. In accordance with a specific preferred embodiment of this curing method, the dispersed or emulsified liquid silicone rubber composition is sprayed into hot air to achieve curing in the sprayed state.

The following examples describe preferred embodiments of the present improved method and should not be interpreted as limiting the scope of the invention as set forth in the accompanying claims. All amounts expressed in parts in the examples are by weight and viscosities were measured at 25°C.

## Example 1

Three parts trimethylsiloxy-terminated methylhydrogenpolysiloxane having a viscosity of 10 centipoise (0.01 Pa.s) and containing 1.5 wt% silicon-bonded hydrogen atoms was added and blended to homogeniety with 100 parts of a hydroxyl group-terminated dimethylpolysiloxane having a viscosity of 2,000 centipoise (2 Pa.s) and containing 0.2 wt% hydroxyl groups to yield a mixture (mixture 1).

1.5 Parts dibutyltin dioctoate was added and mixed into 100 parts of the same dimethylpolysiloxane to yield mixture 2. Mixtures 1 and 2 were placed in separate storage tanks, and these tanks were cooled to -10°C.

250 g. of mixture 1 and 250 g. of mixture 2 were introduced to a static mixer (Element 20 by Tokushu Kika Kogyo Kabushiki Kaisha) and were mixed to homogeneity. 500 g. of the resultant material and 500 g. of ion-exchanged water maintained at +20°C were introduced into a colloid mill (Manton-Gaulin) and were mixed using a blade speed of 1400 rpm and a 0.1 mm clearance to prepare an aqueous dispersion of the curable liquid silicone rubber composition. The dispersion was cooled to +5°C., at which time it was immediately introduced with stirring into 2,000 cc water maintained at 80°C 500 g of a finely divided silicone rubber powder was obtained.

The shape of the silicone rubber powder was determined using a scanning electron microscope. The product was found to be an amorphous silicone rubber powder wherein at least 90% or more of the particles were 100 micrometers in diameter.

## Example 2

10 Parts of a trimethylsiloxy-terminated methylhydrogen-polysiloxane having a viscosity of 10 centipoise (0.01 Pa.s) and containing 1.5 wt% silicon-bonded hydrogen atoms was added to and blended to homogeniety with 100 parts of a hydroxyl-terminated dimethylpolysiloxane having a viscosity of 100 centipoise (0.1 Pa.s) and containing 0.7 wt% hydroxyl groups (mixture 3).

2.0 Parts dibutyltin dioctoate was also added to 100 parts of the same dimethylpolysiloxane used to prepare mixture 3 (mixture 4). Mixtures 3 and 4 were placed in separate storage tanks, and these tanks were cooled to -10°C. 250 Grams each of mixtures 3 and 4 were then introduced to a static mixer (Element 10 by Tokushu Kika Kogyo Kabushiki Kaisha) and were blended to homogeneity. The resultant mixture was placed in a colloid mill, followed by 2,500 g. of ion-exchanged water maintained at +20°C and 2.5 g. of a trimethylnonanol-ethylene oxide adduct, a nonionic surfactant available as Tergitol(R) TMN-6 from Union Carbide Corporation. This mixture was then blended at a rotor speed of 1400 rpm using a 0.1 mm clearance to yield an aqueous dispersion of a curable liquid silicone rubber composition of this invention.

After this dispersion had been stored at room temperature for 3 hours, it was sprayed into air heated at a temperature of 300°C using a discharge rate of 3 litres/hour in order to cure the silicone rubber composition in the sprayed state. 480 Grams of cured silicone rubber powder were collected using a cyclone separator equipped with a bag filter. The powder was uniform, and exhibited minimal aggregation. Examination of the particles revealed that at least 70 percent were spherical is shape and 3 microns in diameter.

## Example 3

The aqueous dispersion of silicone rubber composition described in Example 2 containing 250 g. of mixture 3, 250 g. of mixture 4 and 2500 g. of ion exchanged water was dried in an autoclave at 100 degrees Centigrade to yield 500 g. of a silicone rubber powder exhibiting a bulk specific gravity of 0.19 and a mean particle size of 5 microns.

The preceding examples demonstrate that an aqueous dispersion or emulsion containing as the dispersed phase a curable liquid silicone rubber composition comprising an organopolysiloxane containing at least two silicon-bonded hydroxyl groups in each molecule, an organohydrogenpolysiloxane containing at least two silicon-bonded hydrogen atoms in each molecule and a curing catalyst can be cured to yield uniformly small particles at a high production rate by bringing the dispersion or emulsion into contact with a heated liquid or gas that is preferably at a temperature of at least 50°C.

## Claims

1. In an improved method for producing a cured silicone rubber powder of uniformly small particle size at a high production rate, said method comprising the steps of

I) dispersing the ingredients of a heat curable liquid silicone rubber composition in water to form a dispersion or emulsion containing said ingredients as the discontinuous phase, and then

II) curing said composition by bringing said dispersion or emulsion into contact with a heated liquid or a heated gas, where said liquid and gas are maintained at a temperature higher than the temperature of said emulsion or dispersion,

the improvement comprising selection said heat curable liquid silicone rubber composition from compositions comprising (A) a diorganopolysiloxane having at least two silicon-bonded hydroxyl groups in each molecule, (B) an organohydrogenpolysiloxane having at least two silicon bonded hydrogen atoms in each molecule, and (C) an amount of condensation catalyst sufficient to promote the reaction of A and B.

2. A method according to claim 1 where the organic groups bonded to the silicon atoms of said diorganopolysiloxane and said organohydrogensiloxane are monovalent unsubstituted or substituted hydrocarbon radicals, the molecular weight of said diorganopolysiloxane is at leat 3000, said organohydrogen-siloxane contains no more than 1 weight percent of silicon-bonded hydrogen atoms, said catalyst is selected from organic metal salts, titanic acid esters, amine compounds, the corresponding amine hydrochlorides and platinum compounds, said dispersion or emulsion is maintained at a temperature of from 0 to +25° prior to being cured, at least two of the ingredients of said silicone rubber composition are blended at temperatures of from -60 to +5° C prior to dispersing them in said water, and the temperature of said gas or liquid used to cure said composition is at least 50° C.

3. A method according to claim 2 where said hydrocarbon radicals are methyl in combination with phenyl and/or 3,3,3-trifluoropropyl, the ingredients of said liquid silicone rubber composition are blended at a temperature of from -30 to 0° C, the water into which said composition is dispersed or emulsified contains a surfactant, said heated liquid is water, and said heated gas is air.

4. A method according to claim 3 where said diorganopolysiloxane is selected from the group consisting of hydroxyl-terminated dimethylpolysiloxanes, hydroxyl-terminated dimethylsiloxane-methylphenylsiloxane copolymers, hydroxy-terminated methylvinylpolysiloxanes, and hydroxy-terminated dimethylsiloxane-methylvinylsiloxane copolymers, the organohydrogensiloxane is a methylhydrogenpolysiloxane, and said catalyst is dibutyltin dioctoate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 267 728 (TORAY SILICONE CO., LTD) * Claims 1-5; page 2, lines 31-37; page 2, line 55, page 3, line 1 * --- | 1-4 | C 08 J 3/02 C 08 J 3/26 C 08 J 3/16 // C 08 L 83/04 |
| Y | EP-A-0 242 219 (TORAY SILICONE CO., LTD) * Claims 1-5 * --- | 1-4 | |
| A | EP-A-0 169 098 (RHONE-POULENC SPECIALITIES) * Claims 1-4 * --- | 1 | |
| A | EP-A-0 252 510 (TORAY SILICONE CO., LTD) * Claims 1-4 * --- | 1-4 | |
| L | JP-A-63 202 658 (TORAY SILICONE (Priority)) * Whole document * ----- | 1-4 | |

TECHNICAL FIELDS SEARCHED (Int. Cl.4)

C 08 J

The present search report has been drawn up for all claims

| Place of search | Date of completion of the search | Examiner |
|---|---|---|
| THE HAGUE | 09-03-1989 | OUDOT R. |

EPO FORM 1503 03.82 (P0401)